# EUROPÄISCHE PATENTSCHRIFT

(11) **EP 2 682 779 B1**
(45) Veröffentlichungstag und Bekanntmachung des Hinweises auf die Patenterteilung: **29.10.2014**
(21) Anmeldenummer: 12175308.1
(22) Anmeldetag: 06.07.2012
(51) Int. Cl.: G01S 7/41, G01S 13/86

(54) **Verfahren zur Detektion eines Rades eines Fahrzeugs**
Method for detecting a wheel of a vehicle
Procédé destiné à détecter les roues d'un véhicule

(43) Veröffentlichungstag der Anmeldung: 08.01.2014
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- DE-A1-102008 037 233
- US-A1- 2003 102 997

## Beschreibung

Die vorliegende Erfindung betrifft ein Verfahren zur Detektion eines Rades eines Fahrzeugs durch Aussenden eines elektromagnetischen Messstrahls bekannten Frequenzverlaufs von einer Detektoreinheit aus, Aufzeichnen der Frequenzen des zur Detektoreinheit reflektierten Messstrahls im zeitlichen Verlauf relativ zum bekannten Frequenzverlauf als Empfangssignal, und Detektieren einer Änderung vorgegebener Art im Empfangssignal als Rad.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodass das Detektieren von Rädern (Radachsen) auch eine wichtige Grundlage für die Erhebung oder Kontrolle von Straßenmautgebühren sein kann, insbesondere auch mittels mobiler Kontrollfahrzeuge, welche im Vorbeifahren oder im Gegenverkehr die Achszahl von mautpflichtigen Fahrzeugen kontrollieren sollen.

Aus der DE 10 2008 037 233 A1 ist es bekannt, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Radar-Messstrahls bewirkt, zu detektieren. Dazu wird ein Radar-Geschwindigkeitsmesser verwendet, welcher mit einer Radar-Strahlungskeule den unteren Bereich passierender Fahrzeuge bestrahlt und aus dem zurückerhaltenen Empfangsfrequenzgemisch ein einziges Geschwindigkeitsmesssignal zeitlich mittelt, das an den Orten der Räder Signalmaxima zeigt, die zur Raddetektion verwendet werden.

In den nicht-vorveröffentlichten Patentanmeldungen EP 11 450 079.6 (EP 2 538 238), EP 11 450 080.4 (EP 2 538 239) und PCT/EP 2012/061645 (WO 2012/175 470) hat die Anmelderin der vorliegenden Anmeldung neue, besonders störungsunanfällige und sichere Verfahren zur Raddetektion auf Basis von Dopplermessungen vorgestellt.

Die Anmelderin hat erkannt, dass für eine weitere Verbesserung der Detektionssicherheit eine Aufbereitung des Empfangsignals wünschenswert ist, um Störechos des Messstrahls zu unterdrücken und damit die Signalauswertung effektiver zu gestalten.

Die Erfindung setzt sich zum Ziel, die geschilderten Probleme zu überwinden und ein weiter verbessertes Verfahren zur Raddetektion auf Basis von Dopplermessungen zu schaffen.

Dieses Ziel wird erfindungsgemäß mit einem Verfahren mit den Merkmalen des Anspruchs 1 erreicht.

Die Erfindung beruht auf einer Heranziehung von sog. Onboard-Units (OBUs), welche in Straßenmaut- und Kommunikationssystemen zur Vermautung von Ortsnutzungen von Fahrzeugen dienen, für die Lösung der genannten Probleme. Onboard-Units dieser Art können Funkkommunikationen kurzer Reichweite (dedicated short range communications, DSRC) mit straßenseitigen Funkbaken (roadside entities, RSEs) bekannter Position auf ihrem Weg eingehen, wodurch sie bei erfolgreicher DSRC-Funkkommunikation jeweils auf den Funkabdeckungsbereich der Funkbake verortet werden können. Beispiele solcher bakengestützer, infrastrukturgebundener Straßenmautsysteme sind Straßenmautsysteme nach den Standards CEN-DSRC oder ITS-WAVE (IEEE 802.11p). Doch auch Onboard-Units von satellitengestützten, "bakenlosen" Straßenmautsystemen, bei denen sich die Onboard-Units in einem Satellitennavigationssystem (global navigation satellite system, GNSS) autark selbst verorten und ihre Ortsdaten oder daraus erzeugte Mautdaten z.B. über ein Mobilfunknetz an eine Zentrale senden, können zusätzlich mit DSRC-Funkmodulen ausgestattet sein, sei es für Kontrollauslesezwecke oder als sog. "Hybrid-OBUs", die sowohl mit GNSS- als auch DSRC-Straßenmautsystemen zusammenarbeiten können.

Das Verfahren der Erfindung verwendet die Funkkommunikationsfähigkeit der Onboard-Units, um aus einer Funkkommunikation bei der Passage der Detektoreinheit die Fahrzeuglänge und daraus ein Passagezeitfenster zu gewinnen, das im Empfangssignal zur Ausblendung von Störsignalen verwendet werden kann, wie sie beispielsweise von Reflexionen des Messstrahls an der Fahrbahn oder Echo-Reflexionen des vom Fahrzeug reflektierten und an der Fahrbahn nochmals reflektierten Messstrahls verursacht werden. Im Ergebnis kann eine genaue, störungsunanfällige und treffsichere Raddetektion erreicht werden.

Die in der Onboard-Unit gespeicherte Information kann entweder direkt die Fahrzeuglänge angeben, oder sie gibt indirekt die Achsanzahl, Klasse und/oder das Gewicht des Fahrzeugs an, woraus - beispielsweise anhand gespeicherter Zuordnungstabellen - die Fahrzeuglänge näherungsweise ermittelt werden kann.

Das erfindungsgemäße Auslesen der die Fahrzeuglänge direkt oder indirekt angebenden Information aus der Onboard-Unit hat - gegenüber einem Vermessen der Fahrzeuglänge durch entsprechende Laser-, Radar- oder Ultraschallsensoren vor Ort bei der Fahrzeugpassage - den Vorteil, dass Messfehler, wie sie sonst z.B. durch Fenster bei Bussen, Ladeflächen bei Lastkraftwagen usw. auftreten könnten, nicht in die Raddetektion eingehen können.

Die Geschwindigkeit des Fahrzeugs kann auf vielerlei Arten gemessen werden, beispielsweise mit Hilfe einer Laser-Geschwindigkeitsmesseinrichtung, Lichtschranken, Detektionsschleifen in der Fahrbahn, Kameras usw. Bevorzugt wird die Geschwindigkeit des Fahrzeugs durch Dopplermessung an einer Funkkommunikation zwischen Onboard-Unit und Sendeempfänger durchgeführt, und zwar insbesondere an jener Funkkommunikation, welche zum Auslesen der genannten Information verwendet. Dadurch kann aus Funkkommunikationen mit den Onboard-Units sowohl Längeninformation als auch Geschwindigkeit gewonnen und daraus das Passagezeitfenster berechnet werden.

Gemäß einer weiteren vorteilhaften Ausführungsform der Erfindung kann das Empfangsignal um jene Frequenzanteile kompensiert werden, die durch die Geschwindigkeit des Fahrzeugs verursacht sind, bevor das Detektieren des Rades durchgeführt wird, was die Detektionssicherheit weiter erhöht.

Aus demselben Grund ist es besonders günstig, wenn eine der genannten Änderungen im Empfangssignal nur dann als Rad detektiert wird, wenn sie innerhalb des Zeitfensters liegt, sodass Fehldetektionen, die z.B. auf Messstrahl-Echos außerhalb des Zeitfensters zurückgehen, verhindert werden.

In weiterer Folge werden bevorzugt Räder, die während ein und desselben Zeitfensters detektiert werden, ein und demselben Fahrzeug zugeordnet. Die Radanzahl eines Fahrzeugs kann als Grundlage für eine z.B. radachsenabhängige Straßenmautverrechnung herangezogen werden.

In einer weiteren Ausführungsform des Verfahrens der Erfindung wird das Empfangssignal in einem dem Zeitfenster unmittelbar nachgehenden Abschnitt mit dem Störsignalanteil verglichen und daraus das Vorhandensein eines Anhängers des Fahrzeugs detektiert. Das Vorhandensein eines Anhängers kann als Grundlage für eine z.B. anhängerabhängige Straßenmautverrechnung dienen.

Gemäß einer weiteren vorteilhaften Ausführungsform der Erfindung wird in einem ersten Schritt die Fahrzeuglänge oder eine diese indirekt angebende Fahrzeugeigenschaft von einer stationären oder mobilen Kontrolleinrichtung gemessen, daraus die genannte Information gebildet und über eine Funkkommunikation in der Onboard-Unit gespeichert. Die Kontrolleinrichtung, welche diese Daten misst, kann beispielsweise eine der geographisch verteilten straßenseitigen Funkbaken (RSEs) eines bakengestützten Mautsystems sein, und in besonders ausgestatteten Funkbaken desselben kann die genannte Vermessung durchgeführt werden. Beispielsweise kann die Funkbake mit Hilfe eines Laserscanners, einer Kamera, einer Lichtschranke od.dgl. die Fahrzeuglänge messen. Alternativ kann die gemessene Fahrzeugeigenschaft die Achsanzahl, Klasse und/oder das Gewicht des Fahrzeugs sein, was ebenfalls durch entsprechende Scanner, Lichtschranken, Kameras, Waagen usw. gemessen werden kann.

Das Verfahren der Erfindung eignet sich für jede Art von Messstrahl, der eine Frequenz hat, welche einer dopplereffektbedingten Frequenzverschiebung bei Reflexion an einem sich bewegenden Ziel, wie hier einem sich drehenden Rad, unterliegt. Beispielsweise könnte der Messstrahl ein Laser- oder Ultraschallstrahl sein. Bevorzugt ist der Messstrahl ein von einer Richtantenne ausgesandter Radarstrahl, bevorzugt im Frequenzbereich über 70GHz, welcher dementsprechend gut bündel- bzw. ausrichtbar ist.

Das erfindungsgemäße Verfahren eignet sich für ein Zusammenspiel mit jeder denkbaren Variante von Raddetektionsverfahren anhand einer Auswertung der Dopplerverschiebung des Messstrahls im zeitlichen Verlauf. Bevorzugte Varianten der Erfindung zeichnen sich dadurch aus, dass die genannte Änderung vorgegebener Art ein Sprung, ein Anstieg, ein Abfall oder eine Frequenzaufspreizung des Empfangssignals ist, der bzw. die über einem vorgegebenen Schwellwert liegt, und auch Kombinationen dieser Varianten sind denkbar.

Das Verfahren der Erfindung eignet sich sowohl für stationäre als auch mobile Detektoreinheiten. Bevorzugt wird die Detektoreinheit von einem Kontrollfahrzeug mitgeführt, sodass mit dem Verfahren der Erfindung beispielsweise Fahrzeuge des Gegenverkehrs oder Fahrzeuge auf Nachbarspuren derselben Fahrtrichtung kontrolliert und hinsichtlich ihrer Räder detektiert werden können.

Das Verfahren der Erfindung ist auch für jede Art von Funkkommunikationen geeignet, welche die genannten Onboard-Units abwickeln können, z.B. auch für Mobilfunkkommunikationen in terrestrischen Mobilfunknetzen. Bevorzugt sind die Funkkommunikationen jedoch Funkkommunikationen im Rahmen bakengestützter Straßenmautsysteme nach den Standards CEN-DSRC oder ITS-WAVE.

Die Erfindung wird nachstehend anhand von in den Zeichnungen dargestellten Ausführungsbeispielen näher erläutert. In den Zeichnungen zeigen:
die Fig. 1a - 1d beispielhafte idealisierte Dopplerverschiebungs-Zeitverläufe als Empfangsignale bei unterschiedlichen Winkelstellungen eines Doppler-Messstrahls relativ zu einem Rad;
Fig. 2 das erfindungsgemäße Verfahren anhand eines beispielhaften Strahlverlaufs zwischen einer als Kontrollfahrzeug ausgebildeten Detektoreinheit und einem zu kontrollierenden Fahrzeug in Fahrtrichtung gesehen;
Fig. 3 verschiedene Varianten des Verfahrens der Erfindung anhand einer schematischen Draufsicht auf einen Straßenabschnitt mit einer stationären Kontrolleinrichtung, einer als Kontrollfahrzeug ausgebildeten Detektoreinheit und einem zu kontrollierendem Fahrzeug in aufeinanderfolgenden Phasen des Verfahrens; und
Fig. 4 die Ermittlung des Zeitfensters und diesem voraus- und nachgehender Störsignalanteile des Empfangssignals in der Frequenz/Zeit-Ebene.

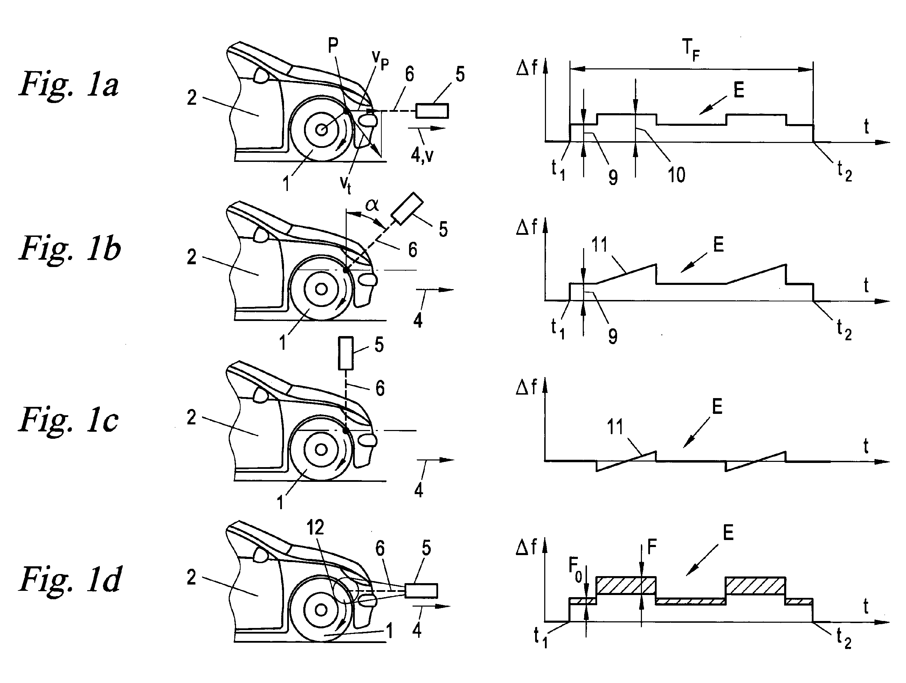

Die Fig. 1 bis 3 zeigen das Prinzip der Detektion eines sich drehenden Rades 1 eines Fahrzeugs 2, das sich auf einer Fahrbahn 3, genauer einer Fahrspur 3' derselben, in einer Fahrtrichtung 4 bewegt. Das Raddetektionsverfahren wird mit Hilfe bzw. in einer Detektoreinheit 5 ausgeführt, welche im gezeigten Beispiel mobil und in Form eines Kontrollfahrzeugs ausgebildet ist. Die Detektoreinheit bzw. das Kontrollfahrzeug 5 bewegt sich beispielsweise auf einer zweiten Fahrspur 3" der Fahrbahn 3 in einer Fahrtrichtung 4', welche bevorzugt - jedoch nicht notwendigerweise - antiparallel zur Fahrtrichtung 4 des zu kontrollierenden Fahrzeugs 2 ist. Es versteht sich, dass die Detektoreinheit 5 auch stationär sein könnte, beispielsweise am Straßenrand der Fahrbahn 3 oder Fahrspur 3' aufgestellt.

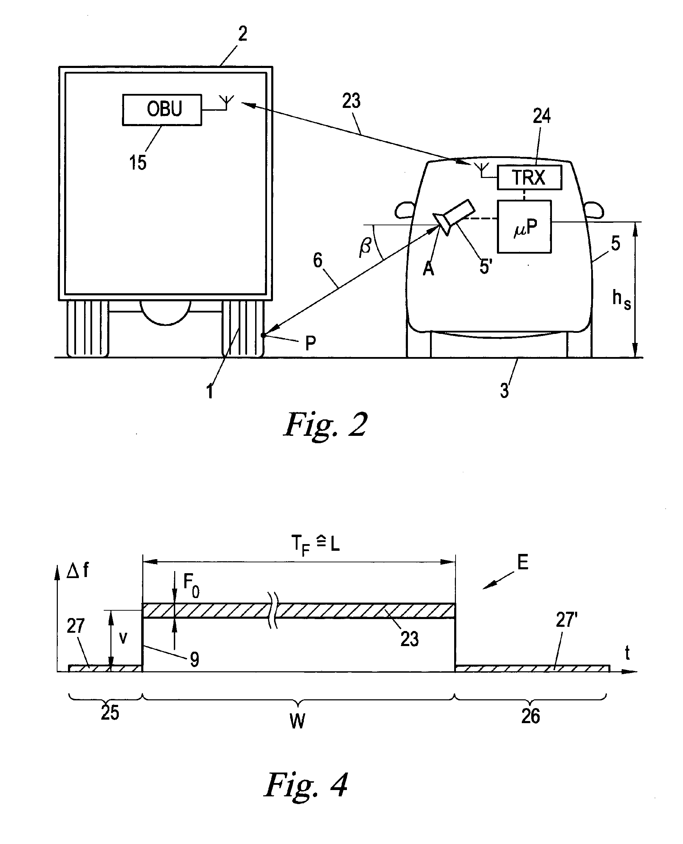

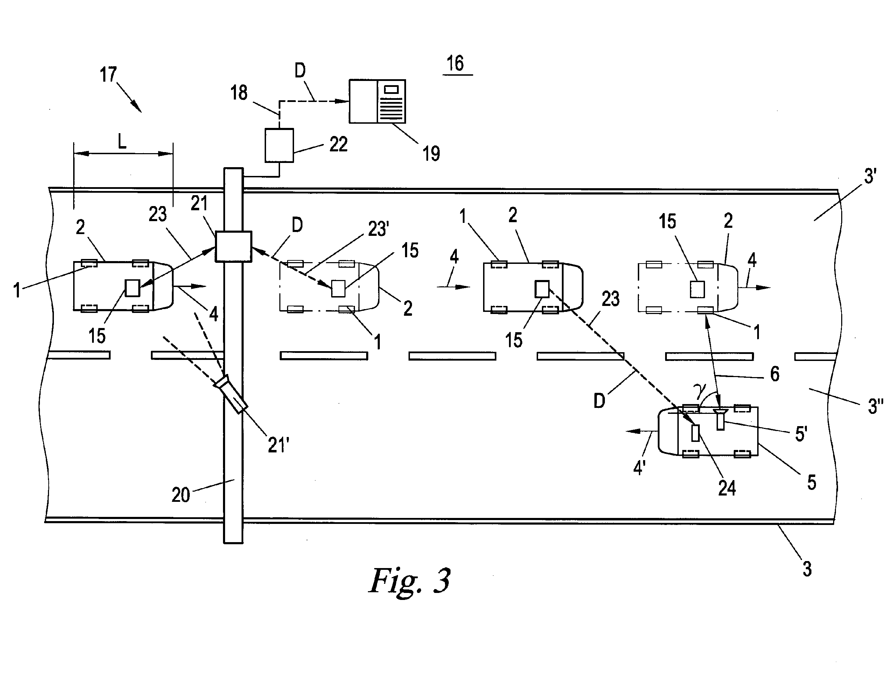

Die Detektoreinheit 5 sendet einen Messstrahl 6, beispielsweise einen Ultraschall-, Lidar- oder bevorzugt Radar-Messstrahl, auf das Fahrzeug 2 bzw. dessen Räder 1 bei der Passage aus, um so die Räder 1 zu detektieren. Aus den Seitenansichten der Fig. 1a - 1d ist ersichtlich, dass der Messstrahl 6 von vorne (Fig. 1a), schräg von vorne-oben (Fig. 1b), von oben (Fig. 1c) oder in jeder anderen Richtung der Zeichnungsebene von Fig. 1 unter einem Winkel α zur Vertikalen auf das Rad 1 gerichtet werden kann. Aus Fig. 2 ist ersichtlich, dass der Messstrahl 6 in Fahrtrichtung 4 gesehen unter unterschiedlichen Winkeln β zur Horizontalen, z.B. von einer Antenne 5' an einer Ausstrahlposition A auf einer vorgegebenen Höhe hₛ über der Fahrbahn 3, von der Detektoreinheit 5 ausgesandt werden kann. Alternativ oder zusätzlich kann der Messstrahl 6 auch von verschiedenen Ausstrahlpositionen auf unterschiedlichen Höhen ausgesandt werden. In der Draufsicht von Fig. 3 ist veranschaulicht, dass der Messstrahl 6 zur Fahrtrichtung 4 (bzw. 4') unterschiedliche Winkel γ einnehmen kann, z.B. von der Detektoreinheit 5 schräg nach vorne gerichtet.

Die Detektoreinheit 5 ist ein Dopplerdetektor und wertet, wie in der Technik bekannt, die Empfangsfrequenz des vom Fahrzeug 2 bzw. seinen Rädern 1 reflektierten Messstrahl 6 aus, wobei aus der dopplereffektbedingten Frequenzverschiebung Δf zwischen ausgesandtem und reflektiertem Messstrahl 6 die in Richtung des Messstrahls 6 liegende (projizierte) Komponente vₚ der Relativgeschwindigkeit v des Fahrzeugs 2 bzw. der Tangentialgeschwindigkeit vₜ des Rades 1 am jeweiligen Punkt P des Auftreffbereichs des Messstrahls 6 ermittelt werden kann. In den rechten Hälften der Fig. 1a - 1d ist diese dopplereffektbedingte Frequenzverschiebung, kurz Dopplerverschiebung, Δf in ihrem zeitlichen Verlauf über der Zeit t aufgetragen, im weiteren auch als "Empfangssignal" E der Detektoreinheit 5 bezeichnet.

Wenn der Messstrahl 6 parallel zur Ebene der Fahrbahn 3 ausgestrahlt wird (α = 90°, β = 0°, γ ≠ 90°), dann ergibt sich das in Fig. 1a gezeigte Empfangssignal E, mit einem sprunghaften Anstieg 9, sobald der Messstrahl 6 die sich mit der Geschwindigkeit v bewegende Karosserie 2 des Fahrzeugs 2 trifft, und einem zusätzlichen Sprung 10 während der Passage des Rads 1. Wenn der Messstrahl 6 etwas schräg von oben auf das Rad 1 bzw. Fahrzeug 2 trifft (0 < α < 90°, 0 < β < 90°, 0 < γ < 180°), ergibt sich das in Fig. 1b gezeigte Empfangssignal E mit einem Anstieg (oder, je nach Betrachtungs- und Passagerichtung, Abfall) 11 während der Passage eines Rads 1. Eine Strahlrichtung schräg von oben mit α = 0°, 0 < β ≤ 90° und γ = 90° führt zu den in Fig. 1c gezeigten Anstiegen (oder, je nach Betrachtungsrichtung, Abfällen) 11, welche um die Eigengeschwindigkeit v des Fahrzeugs 2 bereinigt sind.

Fig. 1d zeigt, dass bei einem real ausgedehnten, nicht ideal-punktförmigen Strahlquerschnitt des Messstrahls 6 im Auftreffbereich 12 des Messstrahls 6 auf dem Rad 1 bzw. Fahrzeug 2 stets eine Superposition der von unterschiedlichen Punkten P im Auftreffbereich 12 herrührenden unterschiedlichen (Tangential-) Geschwindigkeiten bzw. projizierten Geschwindigkeiten vₚ auftritt, welche bei der Passage eines Rads 1 zu einem Empfangsfrequenzgemisch, d.h. einer Aufsplitterung bzw. Aufspreizung F des Dopplerverschiebungsverlaufs bzw. Empfangssignals E führt, die größer ist als jene Frequenzaufspreizung F₀, welche bloß bei der Passage der Karosserie des Fahrzeugs 2 auftritt. Auch eine solche Frequenzaufspreizung F kann ebenfalls als Kriterium für das Auftreten eines Rades 1 festgelegt werden.

Das Auftreten eines Rades 1 an einem passierenden Fahrzeug 2 kann daher an einer Änderung vorgegebener Art wie einem Frequenzsprung 10, einem Anstieg oder Abfall 11 und/oder einer Frequenzaufspreizung F im Empfangssignal E detektiert werden, die jeweils einen vorgegebenen Schwellwert überschreiten.

Für die genannte Dopplerauswertung und -detektion kann die Detektoreinheit 5 von jeder in der Technik bekannten Art sein, sei es mit einem kontinuierlichen, modulierten oder einem gepulsten Messstrahl 6. Bei einem kontinuierlichen Messstrahl 6 kann eine Dopplerfrequenzverschiebung zwischen den Eigenfrequenzen ("Trägerfrequenzen") des ausgesandten und des reflektierten Messstrahl 6 z.B. durch Interferenzmessung ermittelt werden. Bei einem gepulsten oder modulierten Messstrahl kann eine Dopplerverschiebung zwischen den Impulsraten bzw. Modulationsfrequenzen des ausgesandten und des reflektierten Messstrahls 6 gemessen werden. Alle solche Eigen-, Träger-, Impuls- oder Modulationsfrequenzen werden unter den hier verwendeten Begriffen der "Sendefrequenz" des Messstrahls 6 und "Empfangsfrequenz" des reflektierten Messstrahls 6 verstanden, d.h. der Begriff Empfangsfrequenz umfasst jedwede durch einen Dopplereffekt beeinflussbare Frequenz des Messstrahls 6.

Fig. 4 zeigt ein Empfangssignal E, wie es bei der Passage des Fahrzeugs 2 der Detektoreinheit 5 auftritt, wenn der Messstrahl 6 kein Rad 1, sondern "nur" die Karosserie des Fahrzeugs 2 trifft, welche sich mit der Geschwindigkeit v bewegt, unter Berücksichtigung der geometriebedingten Frequenzaufspreizung F₀. Aus den Fig. 1a, 1b, 1d und 4 (d.h. ausgenommen Fig. 1c, wo die Richtung des Messstrahls 6 normal zur Fahrtrichtung 4 des Fahrzeugs 2 ist) ist ersichtlich, dass während der Dauer T_{F} der Fahrzeugpassage an der Detektoreinheit 5 eine im wesentlichen konstante Änderung, und zwar der sprunghafte Anstieg 9 um die Geschwindigkeit v, im Empfangsignal E auftritt. Die Dauer T_{F} dieses "Passagezeitfensters" kann für eine verbesserte Auswertung des Empfangssignals E zur Raddetektion herangezogen werden, und zwar mit Hilfe des nun im Folgenden beschriebenen Verfahrens.

Das Verfahren beruht auf der Verwendung von Onboard-Units (OBUs) 15, die jeweils von einem Fahrzeug 2 mitgeführt werden, um diesem die Teilnahme an einem Straßenmaut- oder -kommunikationssystem zu gestatten. Da die Detektion von Rädern 1 eines Fahrzeugs 2 gerade für Straßenmautsysteme häufig als Grundlage zur Gebührenbemessung herangezogen wird, können die OBUs 15 in solchen Straßenmautsystemen gleichzeitig für die hier geschilderten Zwecke mitverwendet werden.

Fig. 3 zeigt ausschnittsweise ein Straßenmautsystem 16, das eine Vielzahl geographisch verteilter Kontrolleinrichtungen 17 (nur eine gezeigt) umfasst, die beispielsweise entlang der Fahrbahn 3 mit gegenseitigen Abständen aufgestellt sind. Die Kontrolleinrichtungen 17 stehen über Datenleitungen 18 mit einer Zentrale 19 des Straßenmautsystems 16 in Verbindung. Das Straßenmautsystem 16, insbesondere seine Kontrolleinrichtungen 17, vermauten (vergebühren) Ortsnutzungen von Fahrzeugen 2, z.B. das Befahren der Fahrbahn 3.

Zu diesem Zweck können die Kontrolleinrichtungen 17 beispielsweise als Funkbaken mit einem auf einer Straßenbrücke ("gantry") 20 angeordneten Sendeempfänger 21 und angeschlossenem Bakenrechner 22 ausgeführt sein und über den Sendeempfänger 21 eine Kurzreichweiten-Funkkommunikation 23 (dedicated short range communication, DSRC) mit der OBU 15 eines passierenden Fahrzeugs 2 abwickeln. Die DSRC-Funkkommunikation 23 kann beispielsweise zu einer Mauttransaktion führen, welche über den Bakenrechner 22 und die Datenverbindung 18 an die Zentrale 19 gemeldet und/oder in der OBU 15 gespeichert wird.

Die Kontrolleinrichtungen (Funkbaken) 17, die OBUs 15 und deren interne Sendeempfänger zur Abwicklung der DSRC-Funkkommunikationen 23 können nach allen bekannten DSRC-Standards aufgebaut sein, insbesondere CEN-DSRC, ITS-G5 oder WAVE (wireless access in vehicular environments). Jede DSRC-Funkkommunikation 23 im Zuge einer Passage einer Funkbake 17 kann beispielsweise ein bestimmtes Benutzungsentgelt von einem Guthabenkonto in der Zentrale 19 und/oder der OBU 15 abbuchen und stellt dann eine "Abbuchungstransaktion" dar; die DSRC-Funkkommunikationen 23 können jedoch auch Identifikations-, Wartungs-, Softwareaktualisierungs-Transaktionen od.dgl. im Rahmen des Straßenmautsystems 16 bilden.

Insbesondere können die DSRC-Funkkommunikationen 23 auch zur Funkabfrage (Auslesung) von in den OBUs 15 gespeicherten Daten wie Stammdaten, Identifizierungsdaten, Transaktionsdaten, Aufzeichnungsdaten usw. herangezogen werden. Solche Funkabfragen 23 können nicht nur von den ortsfesten Kontrolleinrichtungen bzw. Funkbaken 17 aus erfolgen, sondern auch von "mobilen" Funkbaken 17 in Form einer als Kontrollfahrzeug ausgebildeten Detektoreinheit 5. Mit anderen Worten kann auch die Detektoreinheit 5 als Funkbake 17 fungieren, und im übrigen auch umgekehrt eine Funkbake 17 als Detektoreinheit 5. Alles, was über die DSRC-Kommunikationsfähigkeit der Funkbake 17 dargelegt wird, trifft daher auch auf die Detektoreinheit 5 zu, welche zu diesem Zweck mit einem eigenen Sendeempfänger 24 ausgestattet ist, und umgekehrt.

Funkabfragen von OBUs 15 über DSRC-Funkkommunikationen 23 können im übrigen auch in satellitennavigationsbasierten (global navigation satellite system, GNSS-) Straßenmautsystemen 16 durchgeführt werden, in welchen sich die OBUs 15 statt durch ein Netz terrestrischer Funkbaken 17 jeweils autark mittels eines GNSS-Empfängers verorten und ihre Orte oder daraus ermittelte Mauttransaktionen z.B. über das Funkbakennetz oder ein gesondertes Mobilfunknetz an die Zentrale 19 senden: Auch hier können die OBUs 15 mit DSRC-Sendeempfängern für Funkabfragen durch Funkbaken (Kontrolleinrichtungen) 17 oder Kontrollfahrzeuge (Detektoreinheiten) 5 ausgestattet werden. Das hier beschriebene Verfahren und die hier erörterte Detektoreinheit 5 eignen sich daher zum Zusammenwirken sowohl mit bakenbasierten als auch mit satellitenbasierten Straßenmautsystemen 16.

Eine Funkkommunikation 23 zwischen dem Sendeempfänger 24 der Detektoreinheit 5 und dem internen (nicht dargestellten) Sendeempfänger der OBU 15 wird in weiterer Folge dazu herangezogen, eine in der OBU 15 gespeicherte Information D, welche in Beziehung zur Länge L des Fahrzeugs 2 steht, auszulesen, um daraus und in Kenntnis der Geschwindigkeit v des Fahrzeugs 2 und der Beziehung T_{F} = L/v die Passagedauer T_{F} zu berechnen.

Die in der OBU 15 gespeicherte Information D kann sowohl direkt als auch indirekt die Fahrzeuglänge L angeben. In letzterem Fall gibt sie beispielsweise die Achsanzahl, Klasse und/oder das Gewicht des Fahrzeugs an, woraus - z.B. anhand in der Detektoreinheit 5 gespeicherter oder von dieser abrufbarer Fahrzeugtabellen - die für eine bestimmte Achsanzahl, Klasse und/oder ein bestimmtes Gewicht vorgespeicherte Fahrzeuglänge L gleichsam "näherungsweise" aus der Information D ermittelbar ist.

Die Geschwindigkeit v des Fahrzeugs 2 kann wiederum auf verschiedene Arten von der Detektoreinheit 5 gemessen werden, beispielsweise mit Hilfe eines Laser-Geschwindigkeitsmessers, einer Kamera, Lichtschranken usw., die von der Detektoreinheit 5 mitgeführt werden und die Geschwindigkeit v des passierenden Fahrzeugs 2 messen. Es genügt dabei, die Geschwindigkeit v nur zu einem bestimmten Zeitpunkt während oder knapp vor bzw. nach der Fahrzeugpassage zu messen. Alternativ könnte auch die maximale während (oder im Bereich) der Fahrzeugpassage auftretende Geschwindigkeit v des Fahrzeugs gemessen und verwendet werden, um die minimale Passagedauer T_{F} zu berechnen und zur Erhöhung der Detektionszuverlässigkeit weiterzuverwenden.

In dem in den Fig. 1 - 4 gezeigten Beispiel wird die Geschwindigkeit v direkt aus einer Funkkommunikation 23 ermittelt, und zwar durch Dopplermessung an der Funkkommunikation 23 selbst. Das Verfahren beruht in diesem Fall auf der Verwendung von speziellen Sendeempfängern 24 in der Detektoreinheit 5, welche in der Lage sind, anhand der Kommunikationsrichtung zwischen OBU 15 und Sendeempfänger 24 in Bezug auf die Fahrtrichtung 4' der Detektoreinheit 5, der sich daraus ergebenden Winkelverhältnisse, sowie der in Richtung der Funkkommunikation 23 gemessenen Dopplerverschiebung der Funkkommunikation 23 und damit Relativbewegung zwischen Onboard-Unit 15 und Sendeempfänger 24 die Geschwindigkeit v des Fahrzeugs 2 in Fahrtrichtung 4 zumindest näherungsweise zu ermitteln. Bevorzugt wird dazu genau jene Funkkommunikation 23 verwendet, über welche auch die Information D aus der OBU 15 ausgelesen wird.

Alternativ könnte die Geschwindigkeit v auch mit Hilfe des Messstrahls 6 selbst, d.h. direkt aus dem Empfangsfunksignal E, gemessen werden, z.B. anhand der Größe der Frequenzsprünge 9.

Die die Fahrzeuglänge L angebende Information D kann in der OBU 15 vorgespeichert sein, z.B. bei der Auslieferung der OBU 15 an den Benutzer fahrzeugspezifisch eingespeichert oder vom Benutzer nach Auslieferung selbst in die OBU 15 eingegeben werden. Alternativ kann die Fahrzeuglänge L oder eine diese indirekt angebende Fahrzeugeigenschaft wie Achsanzahl, Klasse und/oder Gewicht des Fahrzeugs 2 von einer stationären oder mobilen Kontrolleinrichtung 17 auf dem Weg des Fahrzeugs 2 gemessen werden, beispielsweise mit Hilfe eines Scanners 21', einer Kamera, einer Lichtschranke od.dgl., und daraus die Information D gebildet und über eine Funkkommunikation 23' in der OBU 15 gespeichert werden, wie in der linken Hälfte von Fig. 3 gezeigt.

Wenn ein Fahrzeug 2 somit die Detektoreinrichtung 5 passiert, wird über die Funkkommunikation 23 die in der OBU 15 gespeicherte Information D ausgelesen und daraus die Fahrzeuglänge L ermittelt. Gleichzeitig, kurz zuvor oder kurz danach wird die Geschwindigkeit v des Fahrzeugs 2 gemessen, sodass aus der ermittelten Fahrzeuglänge L und der gemessenen Geschwindigkeit v die Dauer T_{F} der Fahrzeugpassage berechnet werden kann, wie oben erläutert.

Gemäß Fig. 4 wird nun in Kenntnis der Dauer T_{F} im Empfangssignal E ein Zeitfenster W ermittelt, dessen Länge gleich der Dauer T_{F} ist und das zeitlich mit den Grenzen t₁, t₂ jener konstanten Änderung 9 des Empfangssignals E zusammenfällt, welche auf die Passage der Fahrzeugkarosserie zurückzuführen ist. Mit anderen Worten wird ein Zeitfenster W der Dauer T_{F} entlang der Zeitachse t des Empfangssignals E so positioniert, bis seine Anfangs- und Endpunkte mit den Anfangs- und Endpunkten t₁, t₂ einer konstanten Änderung 9 annähernd übereinstimmen.

Anschließend wird in einem dem Passagezeitfenster W unmittelbar vorausgehenden Zeitabschnitt 25 oder unmittelbar nachhergehenden Zeitabschnitt 26 des Empfangssignals E ein Störsignalanteil 27 bestimmt, welcher in weiterer Folge dazu verwendet wird, das Empfangssignal E im Zeitfenster W um diesen Störsignalanteil 27 zu kompensieren. Beispielsweise könnte eine Frequenzanalyse der im Abschnitt 25 und/oder Abschnitt 26 auftretenden Empfangsfrequenzen durchgeführt und diese aus dem Empfangssignal E im Zeitfenster W gelöscht, z.B. subtrahiert, werden.

Bevorzugt wird dazu nur der dem Zeitfenster W bzw. der Fahrzeugpassage T_{F} vorausgehende Abschnitt 25 verwendet, da das Fahrzeug 2 einen Anhänger haben könnte, welcher im nachfolgenden Abschnitt 26 sonst fälschlich als Störsignalanteil betrachtet werden könnte. Gemäß einer weiteren Ausführungsform des Verfahrens kann somit ein im nachgehenden Abschnitt 26 auftretender Signalanteil 27' mit dem Störsignalanteil 27 des vorausgehenden Abschnitts 25 verglichen werden und, wenn der Signalanteil 27' signifikant vom Störsignalanteil 27 abweicht, kann daraus auf das Vorhandensein eines Anhängers des Fahrzeugs 2 geschlossen werden.

Darüberhinaus kann das Passagezeitfenster W auch dazu verwendet werden, all jene Räder 4, die während desselben Passagezeitfensters W detektiert werden, ein und demselben Fahrzeug 2 zuzuordnen, um daraus die Achsanzahl eines Fahrzeugs 2 zu berechnen.

Ferner kann das Empfangsignal E im Zeitfenster W um jene Frequenzanteile, die durch die Geschwindigkeit v des Fahrzeugs 2 verursacht sind, kompensiert werden, z.B. die konstante Änderung 9 subtrahiert werden, um die Detektion der Änderungen 10, 11, F im Zeitfenster W des Empfangsignals E zu erleichtern.

Es versteht sich, dass die Detektoreinheit 5 dazu sowohl in der gezeigten mobilen Form als Kontrollfahrzeug als auch in stationärer Form z.B. unter Verwendung bestehender Funk-Infrastruktur wie WAVE- oder DSRC-Funkbaken eines Straßenmautsystems oder WLAN-Funkbaken einer straßenseitigen Internet-Infrastruktur, realisiert werden kann. Dadurch können z.B. bereits vorhandene Sendeempfangsteile von WLAN-, WAVE- oder DSRC-Funkbaken als Sendeempfangsteil einer Doppler-Detektoreinheit 5 verwendet werden. Das Verfahren der Erfindung kann auf diese Weise z.B. als eine auf einer herkömmlichen mobilen oder stationären WLAN-, WAVE- oder DSRC-Kontrolleinrichtung oder -Funkbake laufende Softwareapplikation implementiert werden.

Bislang wurde davon ausgegangen, dass die Sendefrequenz des Messstrahls 6 konstant ist, d.h. ihr zeitlicher Verlauf ein konstanter Verlauf ist. Es ist jedoch auch möglich, dass die Detektoreinheit 5 einen Messstrahl 6 mit einem zeitlich nichtkonstanten Sendefrequenzverlauf aussendet, beispielsweise im Falle von Frequency-Hopping-Verfahren, bei denen die Frequenz ständig - nach einem vorgegebenen bzw. bekannten Muster - wechselt. Die aufgezeichneten Empfangsfrequenz(gemisch)verläufe bzw. Empfangsignale E der Fig. 1a - 1d und 4 werden relativ zu dem vorbekannten zeitlichen Verlauf der Sendefrequenz des Messstrahls 6 - sei er konstant oder wechselnd - aufgezeichnet, d.h. auf diesen referenziert bzw. normiert, so dass der Effekt von bekannten Sendefrequenzverläufen kompensiert werden kann.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Detektion eines Rades (1) eines Fahrzeugs (2) durch Aussenden eines elektromagnetischen Messstrahls (6) bekannten Frequenzverlaufs von einer Detektoreinheit (5) und Aufzeichnen der Frequenzen des zur Detektoreinheit (5) reflektierten Messstrahls (6) im zeitlichen Verlauf relativ zum bekannten Frequenzverlauf als Empfangssignal (E),
wobei das Fahrzeug (2) eine Onboard-Unit (15) aufweist, die eine Funkkommunikation (23) mit einem Sendeempfänger (24) der Detektoreinheit (5) eingehen kann und eine die Fahrzeuglänge (L) zumindest indirekt angebende Information (D) speichert, umfassend:
Auslesen der genannten Information (D) aus der Onboard-Unit (15) über eine Funkkommunikation (23) und Messen der Geschwindigkeit (v) des Fahrzeugs (2),
Berechnen der Dauer (T_{F}) der Passage des Fahrzeugs (2) an der Detektoreinheit (5) aus der genannten Information (D) und der Geschwindigkeit (v),
Ermitteln eines Zeitfensters (W) im Empfangssignal (E), das über die genannte Dauer (T_{f}) eine annähernd konstante Änderung (9) des Empfangssignals (E) zeigt,
Ermitteln eines Störsignalanteils (27) in einem dem Zeitfenster (W) unmittelbar vorausgehenden Abschnitt (25) des Empfangssignals (E),
Kompensieren des Empfangssignals (E) im Zeitfenster (W) um den Störsignalanteil (27), und
Detektieren zumindest einer weiteren Änderung (10, 11, F) von der Art eines Sprungs (10), eines Anstiegs (11), eines Abfalls (11) oder einer Frequenzaufspreizung (F) des Empfangssignals (E), der bzw. die über einem vorgegebenen Schwellwert liegt, innerhalb des Zeitfensters (W) als Rad (1).

2. Verfahren nach Anspruch 1, **dadurch gekennzeichnet, dass** die in der Onboard-Unit (15) gespeicherte Information (D) direkt die Fahrzeuglänge (L) angibt.

3. Verfahren nach Anspruch 1, **dadurch gekennzeichnet, dass** die in der Onboard-Unit (15) gespeicherte Information (D) die Achsanzahl, Klasse und/oder das Gewicht des Fahrzeugs (2) angibt, aus welcher die Fahrzeuglänge (L) näherungsweise ermittelt wird.

4. Verfahren nach einem der Ansprüche 1 bis 3, **dadurch gekennzeichnet, dass** die Geschwindigkeit (v) des Fahrzeugs (2) durch Dopplermessung an einer Funkkommunikation (23) zwischen Onboard-Unit (15) und Sendeempfänger (24) durchgeführt wird,

5. Verfahren nach Anspruch 4, **dadurch gekennzeichnet, dass** die Dopplermessung an jener Funkkommunikation (23) durchgeführt wird, welche zum Auslesen der genannten Information (D) verwendet wird.

6. Verfahren nach einem der Ansprüche 1 bis 5, **gekennzeichnet durch** Kompensieren des Empfangssignals (E) um Frequenzanteile, die **durch** die Geschwindigkeit (v) des Fahrzeugs (2) verursacht sind, bevor das Detektieren des Rades (1) durchgeführt wird.

7. Verfahren nach einem der Ansprüche 1 bis 6, **dadurch gekennzeichnet, dass** Räder (1), die während ein und desselben Zeitfensters (W) detektiert werden, ein und demselben Fahrzeug (2) zugeordnet werden.

8. Verfahren nach einem der Ansprüche 1 bis 7, **dadurch gekennzeichnet, dass** das Empfangssignal (E, 27') in einem dem Zeitfenster (W) unmittelbar nachgehenden Abschnitt (26) mit dem Störsignalanteil (27) verglichen und daraus das Vorhandensein eines Anhängers des Fahrzeugs (2) detektiert wird.

9. Verfahren nach einem der Ansprüche 1 bis 8, **dadurch gekennzeichnet, dass** die Fahrzeuglänge (L) oder eine diese indirekt angebende Fahrzeugeigenschaft von einer stationären oder mobilen Kontrolleinrichtung (17) gemessen, daraus die genannte Information (D) gebildet und über eine Funkkommunikation (23') in der Onboard-Unit (15) gespeichert wird.

10. Verfahren nach Anspruch 9, **dadurch gekennzeichnet, dass** die gemessene Fahrzeugeigenschaft die Achsanzahl, Klasse und/oder das Gewicht des Fahrzeugs (2) ist.

11. Verfahren nach einem der Ansprüche 1 bis 10, **dadurch gekennzeichnet, dass** der Messstrahl (6) ein von einer Richtantenne ausgesandter Radarstrahl ist, bevorzugt im Frequenzbereich über 70 GHz.

12. Verfahren nach einem der Ansprüche 1 bis 11, **dadurch gekennzeichnet, dass** die Detektoreinheit (5) von einem Kontrollfahrzeug mitgeführt wird.

13. Verfahren nach einem der Ansprüche 1 bis 12, **dadurch gekennzeichnet, dass** die Funkkommunikation (23, 23') nach den Standards CEN-DSRC oder ITS-WAVE erfolgt.

## Claims

1. A method for detecting a wheel (1) of a vehicle (2) by emitting an electromagnetic measuring beam (6) having a known frequency progression over time from a detector unit (5) and recording the frequencies of the measuring beam (6) that is reflected to the detector unit (5) over time relative to the known frequency progression over time as a received signal (E),
wherein the vehicle (2) comprises an onboard unit (15), which can establish a radio communication (23) with a transceiver (24) of the detector unit (5) and stores information (D) that indicates the vehicle length (L) at least indirectly, comprising:
reading said information (D) from the onboard unit (15) by way of a radio communication (23) and measuring the speed (v) of the vehicle (2),
computing the duration (T_{F}) of passage of the vehicle (2) passing the detector unit (5) based on this information (D) and the speed (v),
determining a time window (W) in the received signal (E) which shows an approximately constant change (9) of the received signal (E) over the aforementioned duration (T_{F}),
determining a spurious signal component (27) in a segment (25) of the received signal (E) that immediately precedes the time window (W),
compensating the received signal (E) in the time window (W) by the spurious signal component (27), and
detecting at least one further change (10, 11, F) in the form of a jump (10), an increase (11), a drop (11) or a spread spectrum (F) of the received signal (E), in each case exceeding a predetermined threshold value, within the time window (W) as a wheel (1).

2. The method according to claim 1, **characterized in that** the information (D) that is stored in the onboard unit (15) directly indicates the vehicle length (L).

3. The method according to claim 1, **characterized in that** the information (D) that is stored in the onboard unit (15) indicates the number of axles, class and/or weight of the vehicle (2), based on which the approximate vehicle length (L) is determined.

4. The method according to any one of claims 1 to 3, **characterized in that** the speed (v) of the vehicle (2) is measured by way of Doppler measurement based on a radio communication (23) between the onboard unit (15) and the transceiver (24).

5. The method according to claim 4, **characterized in that** the Doppler measurement is carried out based on the radio communication (23) that is used for reading out the aforementioned information (D).

6. The method according to any one of claims 1 to 5, **characterized by** the compensation of the received signal (E) by frequency components that are caused by the speed (v) of the vehicle (2) before the detection of the wheel (1) is carried out.

7. The method according to any one of claims 1 to 6, **characterized in that** wheels (1) that are detected during one and the same time window (W) are associated with one and the same vehicle (2).

8. The method according to any one of claims 1 to 7, **characterized in that** the received signal (E, 27') is compared to the spurious signal component (27) during a segment (26) that immediately follows the time window (W), and the presence of a trailer of the vehicle (2) is detected based thereon.

9. The method according to any one of claims 1 to 8, **characterized in that** the vehicle length (L), or a vehicle property indirectly indicating the same, is measured by a stationary or mobile control device (17), and based thereon the information (D) is formed and stored in the onboard unit (15) by way of a radio communication (23').

10. The method according to claim 9, **characterized in that** the measured vehicle property is the number of axles, class and/or weight of the vehicle (2).

11. The method according to any one of claims 1 to 10, **characterized in that** the measuring beam (6) is a radar beam that is emitted by a directional antenna, preferably in the frequency range above 70 GHz.

12. The method according to any one of claims 1 to 11, **characterized in that** the detector unit (5) is carried by a control vehicle.

13. The method according to any one of claims 1 to 12, **characterized in that** the radio communication (23, 23') takes place according to the CEN-DSRC or ITS-WAVE standards.

## Revendications

1. Procédé pour la détection d'une roue (1) d'un véhicule (2) par l'émission d'un faisceau de mesure électromagnétique (6) présentant une courbe de fréquence connue et venant d'une unité de détection (5), et par l'enregistrement des fréquences du faisceau de mesure (6) réfléchi vers l'unité de détection (5) dans le temps par rapport à la courbe de fréquence en tant que signal de réception (E),
dans lequel le véhicule (2) comporte une unité embarquée (15) capable d'entrer en communication radio (23) avec un émetteur-récepteur (24) de l'unité de détection (5) et enregistrant une information (D) indiquant au moins indirectement la longueur du véhicule (L), comprenant :
la lecture de ladite information (D) à partir de l'unité embarquée (15) par une communication radio (23) et la mesure de la vitesse (v) du véhicule (2),
le calcul de la durée (T_{F}) du passage du véhicule (2) devant l'unité de détection (5) à partir de ladite information (D) et de la vitesse (v),
la détermination d'une fenêtre temporelle (W) dans le signal de réception (E), montrant une modification (9) à peu près constante du signal de réception (E) sur ladite durée (T_{F}),
la détermination d'une composante de signal parasite (27) dans une section (25) du signal de réception (E) précédant directement la fenêtre temporelle (W),
la compensation du signal de réception (E) dans la fenêtre temporelle (W) par la composante de signal parasite (27), et
la détection d'au moins une autre modification (10, 11, F) sous la forme d'un écart (10), d'une ascension (11), d'une chute (11) ou d'un étalement de fréquence (F) du signal de réception (E), au-dessus d'une valeur seuil, dans la fenêtre temporelle (W) en tant que roue (1).

2. Procédé selon la revendication 1, **caractérisé en ce que** l'information (D) enregistrée dans l'unité embarquée (15) indique directement la longueur du véhicule (L).

3. Procédé selon la revendication 1, **caractérisé en ce que** l'information (D) enregistrée dans l'unité embarquée (15) indique le nombre d'axes, la classe et/ou le poids du véhicule (2), à partir desquels la longueur du véhicule (L) est déterminée approximativement.

4. Procédé selon l'une des revendications 1 à 3, **caractérisé en ce que** la vitesse (v) du véhicule (2) est mesurée par une mesure Doppler dans une communication radio (23) entre l'unité embarquée (15) et l'émetteur-récepteur (24).

5. Procédé selon la revendication 4, **caractérisé en ce que** la mesure Doppler est réalisée dans la communication radio (23) utilisée pour la lecture de ladite information (D).

6. Procédé selon l'une des revendications 1 à 5, **caractérisé par** la compensation du signal de réception (E) par des composantes de fréquence causées par la vitesse (v) du véhicule (2), avant la détection de la roue (1) est réalisée.

7. Procédé selon l'une des revendications 1 à 6, **caractérisé en ce que** des roues (1) détectées dans une seule et même fenêtre temporelle (W) sont attribuées à un seul et même véhicule (2).

8. Procédé selon l'une des revendications 1 à 7, **caractérisé en ce que** le signal de réception (E, 27') est comparé avec la composante de signal parasite (27) dans une section (26) suivant directement la fenêtre temporelle (W), permettant ainsi de détecter la présence d'une remorque du véhicule (2).

9. Procédé selon l'une des revendications 1 à 8, **caractérisé en ce que** la longueur du véhicule (L) ou une caractéristique du véhicule indiquant indirectement celle-ci est mesurée par un dispositif de contrôle (17) immobile ou mobile, ladite information (D) étant formée sur cette base et enregistrée dans l'unité embarquée (15) par une communication radio (23').

10. Procédé selon la revendication 9, **caractérisé en ce que** la caractéristique de véhicule mesurée est le nombre d'axes, la classe et/ou le poids du véhicule (2).

11. Procédé selon l'une des revendications 1 à 10, **caractérisé en ce que** le faisceau de mesure (6) est un faisceau de radar émis par une antenne directive, de préférence dans la plage de fréquence supérieure à 70 GHz.

12. Procédé selon l'une des revendications 1 à 11, **caractérisé en ce que** l'unité de détection (5) est embarquée par un véhicule de contrôle.

13. Procédé selon l'une des revendications 1 à 12, **caractérisé en ce que** la communication radio (23, 23') est réalisée selon les normes CEN-DSRC ou ITS-WAVE.
